# FASCICULE DE BREVET EUROPEEN

(11) **EP 2 900 500 B1**
(45) Date de publication et mention de la délivrance du brevet: **08.05.2019**
(21) Numéro de dépôt: 13779273.5
(22) Date de dépôt: 20.09.2013
(51) Int. Cl.: B60K 6/26, B60K 6/387, B60K 6/40, B60K 6/48, B60L 11/14, H02K 3/28, H02K 3/52

(54) **DISPOSITIF POUR VÉHICULE HYBRIDE AVEC UN MOYEU DE SUPPORT D'UN ROTOR RÉALISÉ EN TÔLE ET PORTANT UN PLATEAU DE RÉACTION D'UN EMBRAYAGE**
VORRICHTUNG FÜR EIN HYBRIDFAHRZEUG MIT ROTORTRÄGERNABE AUS METALLBLECH UND UNTERSTÜTZUNG EINER KUPPLUNGSREAKTIONSPLATTE
DEVICE FOR HYBRID VEHICLE HAVING A ROTOR SUPPORT HUB MADE OF SHEET METAL AND SUPPORTING A CLUTCH REACTION PLATE

(30) Priorité: 25.09.2012 FR 1258978; 22.05.2013 FR 1354575
(43) Date de publication de la demande: 05.08.2015
(73) Titulaire: Valeo Equipements Electriques Moteur, 94046 Créteil Cedex (FR)
(72) Inventeur: JUGOVIC, Svetislav, F-91200 Athis-Mons (FR); EL BARAKA, Khadija, F-77700 Serris (FR); LEBAS, Gilles, F-80800 Villiers Bretonneux (FR); LEBEAU, Fabien, F-02100 Harly (FR)
(74) Mandataire: Cardon, Nicolas
(86) Numéro de dépôt international: PCT/FR2013/052177
(87) Numéro de publication internationale: WO 2014/049240

(56) Documents cités:
- EP-A1- 1 112 884
- EP-A2- 1 396 921
- WO-A1-01/76041
- FR-A1- 2 782 355
- FR-A1- 2 830 589

## Description

### Domaine technique

L'invention se rapporte au domaine des transmissions pour véhicule automobile de type hybride et concerne un dispositif pour un ensemble de transmission destiné à être disposé entre un moteur à combustion interne et une boîte de vitesses d'un véhicule automobile.

Elle vise notamment un ensemble de transmission permettant l'intégration d'une machine électrique dans la chaîne de transmission du véhicule, entre le moteur et la boîte de vitesses.

### Arrière-plan technologique

On connaît des ensembles de transmission pour véhicule automobile hybride, comprenant deux embrayages et une machine électrique, disposés entre le moteur à combustion interne du véhicule et sa boîte de vitesses. Un tel ensemble est par exemple décrit dans le document FR 2 830 589. Chacun des embrayages comporte un disque de friction, une butée d'embrayage, un plateau de réaction et un mécanisme d'embrayage, comprenant un plateau de pression monté mobile axialement par rapport audit plateau de réaction entre une position embrayée dans laquelle le disque de friction est pincé entre lesdits plateaux de pression et de réaction et une position débrayée. Les deux embrayages sont disposés de part et d'autre de la machine électrique. Le mécanisme d'un premier embrayage, disposé côté moteur, est configuré pour être associé au vilebrequin du moteur à combustion interne. Le disque de friction du premier embrayage est monté solidaire en rotation d'un arbre intermédiaire qui est fixé à un moyeu de support du rotor de la machine électrique. Le mécanisme ainsi que le plateau de réaction du second embrayage, disposé côté boîte de vitesses, sont monté solidaire en rotation dudit moyeu de support du rotor et le disque de friction dudit second embrayage est destiné à coopérer avec un arbre d'entrée d'une boîte de vitesses.

L'embrayage, côté moteur, permet donc d'accoupler en rotation le vilebrequin du moteur à combustion au rotor de la machine électrique et l'embrayage, côté boîte de vitesses, permet d'accoupler le rotor à l'arbre d'entrée de la boîte de vitesse. Ainsi, on peut couper le moteur à combustion interne à chaque arrêt et le redémarrer grâce à la machine électrique. La machine électrique peut également constituer un frein électrique ou apporter un surplus d'énergie au moteur à combustion pour l'assister ou éviter que celui-ci ne cale. Lorsque le moteur tourne, la machine électrique joue le rôle d'un alternateur.

Dans le document FR 2 830 589 mentionné ci-dessus, le moyeu de support du rotor et le plateau de pression du second embrayage, côté boîte de vitesses, sont formés par un élément en fonte d'un seul tenant. Ainsi, compte-tenu de la forte conductivité de la fonte, le rotor et le plateau de réaction du second embrayage ne sont pas convenablement isolés thermiquement de telle sorte que des calories générées lors du frottement du disque de friction du second embrayage sur le plateau de réaction sont transmises au rotor, nuisant ainsi aux performances de la machine électrique et à la sécurité de la machine électrique.

Par ailleurs, la fixation du rotor sur l'élément en fonte est particulièrement difficile à réaliser.

### Résumé

Une idée à la base de l'invention est de proposer un dispositif pour un ensemble de transmission comportant une machine électrique et un embrayage associé au rotor de la machine électrique dans lequel l'impact des calories générées par le frottement de l'embrayage sur les performances de la machine électrique soit faible.

Pour ce faire, selon un mode de réalisation, l'invention propose un dispositif pour un ensemble de transmission de véhicule automobile comprenant :
- une machine électrique comportant un stator, un rotor mobile en rotation autour d'une axe X et un moyeu de support du rotor ; et
- un plateau de réaction en fonte d'un embrayage, coaxial audit axe X ; l'ensemble étant remarquable en ce que le moyeu de support du rotor est en tôle et comporte une jupe axiale de support du rotor et un voile radial annulaire portant le plateau de réaction en fonte et en ce que un espace axial est ménagé entre la machine électrique et le plateau de réaction.

Ainsi, l'accouplement entre le plateau de réaction de l'embrayage et le rotor étant réalisé par l'intermédiaire d'une pièce supplémentaire en tôle, la conduction des calories générées lors des opérations d'embrayage vers le rotor de la machine électrique est plus faible que lorsque le moyeu de support du rotor et le plateau de pression du second embrayage sont formés par un élément en fonte d'un seul tenant.

En outre, la réalisation du moyeu de support en tôle facilite le montage du rotor sur son moyeu.

Selon des modes de réalisation, un tel dispositif peut comporter une ou plusieurs des caractéristiques suivantes :
- Le rotor est fixé sur une surface externe de la jupe axiale du moyeu.
- Le rotor comporte un paquet de tôles fixé par frettage sur la surface externe de la jupe axiale. Un tel montage du rotor est particulièrement simple à réaliser lorsque le moyeu de support du rotor est en tôle.
- La jupe axiale de support du rotor comporte sur sa surface externe un épaulement radial d'appui du rotor.
- La jupe axiale présente une portion axiale s'étendant entre l'épaulement radial d'appui du rotor et le voile radial annulaire de sorte à définir un interstice entre le voile annulaire et le rotor. Un tel interstice permet de décaler axialement la zone de raccordement entre le voile radial annulaire, par rapport au rotor de sorte à limiter les fuites magnétiques dans le voile.
- Le voile radial annulaire comporte deux portions planes annulaires raccordées par une portion cambrée. Un tel agencement permet de conférer au voile radial annulaire une flexibilité. Une telle flexibilité permet notamment de rattraper de légers défauts d'alignement entre l'axe de rotation du rotor et l'axe de rotation de l'arbre de boîte de vitesse.
- Le plateau de réaction est fixé au voile radial annulaire dans une zone périphérique s'étendant radialement au-delà d'une zone de frottement du plateau de réaction destinée à coopérer avec un disque de friction en position embrayée. Ainsi, la surface de la zone de frottement n'est pas impactée par la fixation du plateau de réaction sur le voile radial annulaire.
- le plateau de réaction est fixé au voile radial annulaire dans une zone périphérique s'étendant radialement dans la zone de frottement du plateau de réaction destinée à coopérer avec un disque de friction en position embrayée.
- Le dispositif comporte un arbre intermédiaire passant au travers une ouverture centrale du rotor et comprenant une première extrémité cannelée destinée à coopérer avec un moyeu d'un disque de friction d'un autre embrayage et une seconde extrémité pourvue d'une collerette, dans lequel le moyeu de support du rotor comporte une bride interne, s'étendant radialement vers l'intérieur de la jupe axiale, fixée à ladite collerette de l'arbre intermédiaire.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- La figure 1 est une vue, en coupe axiale, d'un ensemble de transmission comportant deux embrayages et une machine électrique et destiné à être disposé entre un moteur à combustion interne et une boîte de vitesses.
- La figure 2 est une vue, en coupe axiale, d'une butée d'embrayage à commande hydraulique pour l'actionnement de l'embrayage, côté moteur.
- La figure 3 est une vue partielle, en perspective, côté moteur, d'un élément de support de stator d'une machine électrique présentant un logement pour accueillir une butée d'embrayage.
- La figure 4 est une vue, en perspective, d'une butée d'embrayage.
- La figure 5 est une vue, en coupe axiale, du logement de l'élément de support de stator de la figure 3.
- Les figures 6 à 8 sont des vues, en coupe axiale, présentant les étapes successives de montage de la butée d'embrayage dans l'élément de support de stator de la figure 3.
- La figure 9 est une vue, en perspective, représentant les pattes de verrouillages dans une position fléchie radialement vers l'intérieur dans laquelle les protubérances sont, en position libérée, et s'étendent en dehors de leur cavité de verrouillage respective.
- La figure 10 est une vue, en coupe, d'une butée d'embrayage et d'un élément de support de stator selon un autre mode de réalisation.
- La figure 11 est une vue en perspective illustrant un embrayage, fixé sur le bloc moteur et un module pré-monté aptes à former un ensemble de transmission selon la figure 1.
- La figure 12 est une vue en perspective, côté moteur de l'ensemble de transmission de la figure 1.
- Les figures 13, 14 et 15 sont des vues, en coupe axiale, d'un ensemble de transmission comportant deux embrayages et une machine électrique selon un deuxième, un troisième et un quatrième modes de réalisation.
- La figure 16 est une vue partielle, en coupe axiale, d'un ensemble de transmission comportant deux embrayages et une machine électrique et équipé d'un flasque anti-poussière disposé entre la machine électrique et l'embrayage, côté boîte de vitesses.
- La figure 17 est une vue en perspective éclatée, du stator et du flasque anti-poussière de la machine électrique de la figure 16.
- La figure 18 est une vue en perspective, du stator et du flasque de la figure 17 lorsqu'ils sont assemblés.
- La figure 19 est une vue en perspective illustrant un stator d'une machine électrique selon un mode de réalisation.
- La figure 20 est une vue en perspective de l'une des bobines de la figure 19.
- La figure 21 est une vue partielle de face d'un rotor d'une machine électrique selon un mode de réalisation.

### Description détaillée de modes de réalisation.

Dans la description et les revendications, on utilisera, les termes "externe", "interne", "avant", "arrière" ainsi que les orientations "axiale" et "radiale" pour désigner, selon les définitions données dans la description, des éléments de l'ensemble de transmission.

Par convention, l'orientation "radiale" est dirigée orthogonalement à l'axe X de rotation de l'ensemble déterminant l'orientation "axiale". L'orientation "circonférentielle" ou "tangentielle" est dirigée orthogonalement à l'axe X de l'ensemble et orthogonalement à la direction radiale.

Les termes "externe" et "interne" sont utilisés pour définir la position relative d'un élément par rapport à un autre selon la direction radiale, par référence à l'axe X, un élément proche de l'axe est ainsi qualifié d'interne par opposition à un élément externe situé radialement en périphérie. Les termes "avant" et "arrière" sont utilisés pour définir la position relative d'un élément par rapport à un autre selon la direction axiale, un élément proche du moteur thermique étant désigné par avant par opposition à un élément proche de la boîte de vitesses désigné par arrière.

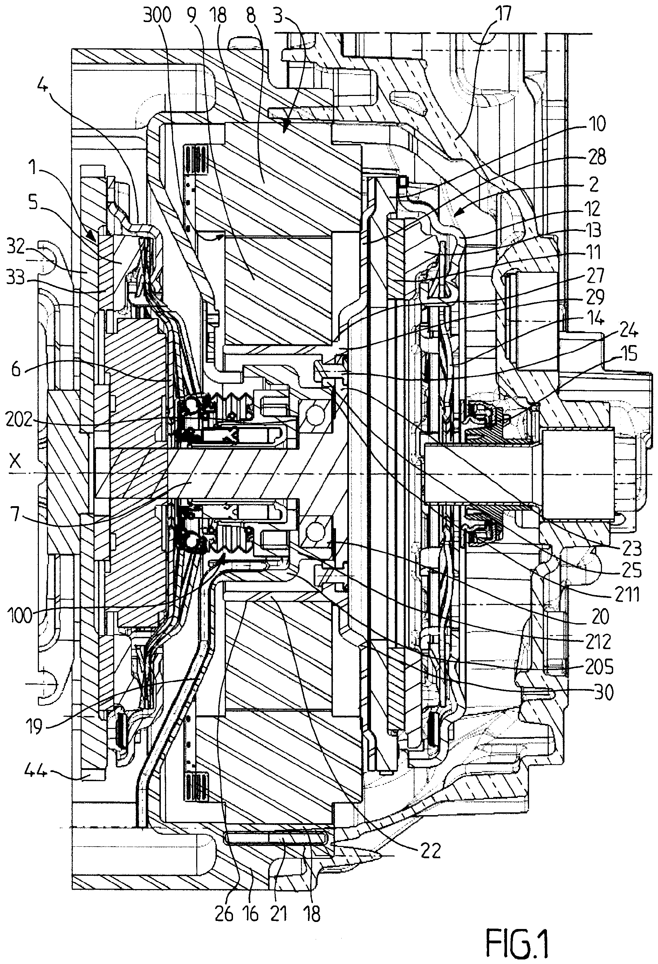

En se reportant à la figure 1, on voit un ensemble de transmission, destiné à être disposé entre un moteur à combustion et une boîte de vitesses, qui comporte un embrayage 1, côté moteur, un embrayage 2, côté boîte de vitesses, et une machine électrique 3 comprenant un stator 8 et un rotor 9.

L'embrayage 1, côté moteur, permet de coupler ou désaccoupler en rotation le vilebrequin du moteur à combustion, non représenté, au rotor 9 de la machine électrique 2. L'embrayage 2, côté boîte de vitesses, permet de coupler ou désaccoupler en rotation le rotor 9 de la machine électrique 3 à un arbre d'entrée de la boîte de vitesses, non représenté. L'ensemble est donc apte à transmettre un couple entre le vilebrequin du moteur thermique et l'arbre d'entrée de la boîte de vitesses.

La machine électrique 3 est une machine électrique tournante réversible du type alterno-démarreur ou du type moteur-générateur. En mode démarreur, l'embrayage 1, côté moteur, est embrayé et la machine électrique 3 permet le démarrage du moteur thermique. En mode alternateur, la machine électrique 3 permet de recharger une batterie du véhicule et/ou d'alimenter les organes ou équipements consommateurs d'énergie lorsque le moteur thermique tourne. Elle est en outre configurée pour récupérer de l'énergie lors du freinage du véhicule. La machine électrique 3 peut notamment être configurée pour arrêter le moteur thermique, par exemple, au feu rouge ou dans les bouchons, et le redémarrer ensuite (Fonction Stop and Go en Anglais). Dans un mode de réalisation, elle est apte à fournir un surplus de puissance permettant d'éviter que le moteur cale (fonction boost en Anglais). Par ailleurs, la machine électrique 3 est apte à entraîner le véhicule au moins sur une courte distance, l'embrayage 1, côté moteur, étant alors désengagé et le moteur thermique arrêté.

L'embrayage 1, côté moteur, comporte un plateau de réaction 32 porté par un volant moteur destiné à être monté sur le vilebrequin, un disque de friction 33 et un mécanisme d'embrayage comprenant un couvercle 4 fixé sur le plateau de réaction 32, un plateau de pression 5 et un diaphragme 6. Le disque de friction 33 comporte un moyeu cannelé coopérant avec des cannelures formées sur un arbre intermédiaire 7.

Le plateau de pression 5 est lié en rotation au couvercle 4 par des languettes tangentielles, non illustrées, élastiques à action axiale autorisant un mouvement axial du plateau de pression 5 par rapport au plateau de réaction 32. Ainsi, le plateau de pression 5 est mobile, par rapport au plateau de réaction 32, entre une position embrayée dans laquelle le disque de friction est pincé entre lesdits plateaux de pression 5 et de réaction 32 et une position débrayée.

En position embrayée, l'embrayage 1 est engagé et le couple est transmis du vilebrequin à l'arbre intermédiaire 7 via le premier embrayage 1. Le diaphragme 6 est en contact, d'une part, à sa périphérie interne, avec une butée d'embrayage 100 et, d'autre part, avec un bossage du plateau de pression 5. Le diaphragme 6 sollicite le plateau de pression 5 en direction du plateau de réaction 32.

Pour désengager l'embrayage 1, la butée d'embrayage 100 déplace axialement la périphérie interne du diaphragme vers l'avant de sorte à faire basculer le diaphragme 6. Ainsi, la charge exercée par le diaphragme 6 sur le plateau de pression 5 diminue de telle sorte que le plateau de pression 5 est rappelé vers l'arrière sous l'action des languettes tangentielles élastiques.

L'embrayage 2, côté boîte de vitesses, comporte un plateau de réaction 10, solidaire en rotation de l'arbre intermédiaire 7, un disque de friction 11 et un mécanisme d'embrayage comportant un couvercle 12, fixé sur le plateau de réaction 10, un plateau de pression 13, mobile axialement par rapport au plateau de réaction 10 entre une position embrayée et une position débrayée, et un diaphragme 14. L'embrayage 2, côté boîte de vitesse, est également équipé de languettes tangentielles élastiques liant le plateau de pression 13 en rotation au couvercle 12.

Le disque de friction 11 est équipé d'un moyeu cannelé destiné à coopérer avec des cannelures formées à l'extrémité de l'arbre d'entrée de la boîte de vitesses, non représenté. Une butée d'embrayage 15 permet de faire basculer le diaphragme 14 afin de désengager l'embrayage 2.

Afin d'assurer une dissipation thermique des calories générées localement par frottement des garnitures de friction des disques d'embrayage 3, 11 sur les plateaux de pression 5, 13 et de réaction 32, 10 des embrayages 1, 2, lesdits plateaux de pression 5, 13 et de réaction 32, 10 sont typiquement réalisés en fonte.

La machine électrique 3 tournante réversible comporte un stator externe 8 et un rotor interne 9. Le stator externe 8 de la machine électrique entoure le rotor interne 9. Un espace annulaire d'entrefer 300 s'étend entre la périphérie interne du stator 8 et la périphérie externe du rotor 9. Le rotor 9 présente une ouverture centrale permettant le passage de l'arbre intermédiaire 7.

Le stator 8 est porté par un élément de support 16 qui est, d'une part, destiné à être fixé sur le bloc moteur et, d'autre part, destiné à être fixé sur le carter 17 de la boîte de vitesses. L'élément de support 16 est inséré entre le carter de la boîte de vitesses et le bloc-moteur et est agencé pour permettre la fixation de la boîte de vitesses au bloc-moteur. En d'autres termes, l'élément de support forme, en quelque sorte, une entretoise entre le bloc-moteur et la carter 17 de la boîte de vitesses.

L'élément de support 16 comporte une paroi périphérique externe 18 dont la surface interne est de forme cylindrique afin de coopérer avec la périphérie externe du stator 8. Le montage du stator 8 dans l'élément de support 16 peut être réalisé par frettage ou par montage par serrage à force. L'élément de support 16 présente également un voile interne 19, s'étendant à l'avant du stator 8 et du rotor 9 et formant une paroi de séparation entre l'embrayage 1, côté moteur, d'une part et la machine électrique 3, d'autre part. La distance entre le voile interne 19 et le rotor 9 est optimisée de sorte à éviter des pertes de courant induit occasionnant des réductions de puissance de la machine électrique.

L'élément de support 16 définit également un logement 201 s'étendant à l'intérieur du rotor 9 et à l'intérieur duquel s'étend, au moins partiellement la butée d'embrayage 100 de l'embrayage 1, côté moteur. Un tel agencement permet d'optimiser l'encombrement axial de l'ensemble. Le logement 201 est défini par une jupe axiale 205 et un fond 212 d'orientation radiale. Le fond 212 est pourvu d'un alésage 202 permettant le passage de l'arbre intermédiaire 7.

Par ailleurs, un rebord axial 211 s'étend du fond 212 du logement, vers l'arrière, et forme avec la face arrière du fond 212 du logement 201, un alésage cylindrique de logement d'un roulement 20. En d'autres termes, le fond 212 du logement 201 limite, côté moteur, l'alésage cylindrique de logement du roulement 20 et définit une surface radiale d'appui avant du roulement 20.

Le roulement 20 coopère, par ailleurs, avec l'arbre intermédiaire 7, à la faveur d'un épaulement qui définit une surface d'appui arrière du roulement 20. Le roulement 20 permet ainsi le centrage de l'arbre intermédiaire 7 par rapport à l'élément de support 16.

Dans un mode de réalisation, non représenté, l'extrémité avant de l'arbre intermédiaire 7 se monte dans le vilebrequin du moteur thermique via un roulement pilote monté dans une cavité du nez du vilebrequin.

Le roulement 20 comporte une bague externe, une bague interne et des corps roulants s'étendant entre lesdites bagues externe et interne. La bague externe est attelée axialement à l'élément de support 16 tandis que la bague interne est attelée axialement à l'arbre intermédiaire 7. Ainsi, le roulement est axialement fixe par rapport à l'élément de support 16, d'une part, et à l'arbre intermédiaire 7, d'autre part. En outre, un tel montage du roulement 20 permet de maintenir axialement l'arbre intermédiaire 7 par rapport à l'élément de support 16.

Afin d'atteler axialement les bagues interne et externe, celles-ci peuvent être emmanchées à force ou collées. De manière alternative, il est également possible d'utiliser un ou plusieurs organes de blocage, tels que des joncs ou circlips élastiques, non représentés. Pour ce faire, l'arbre intermédiaire 7 est équipé d'une gorge de fixation s'étendant à l'avant du roulement 20. Lors d'une opération de fixation du roulement 20, un organe de blocage tel qu'un jonc ou un circlip est agencé, par déformation élastique, dans une position de fixation, dans ladite gorge de fixation, de manière à limiter le déplacement axial du roulement 20, vers l'avant. De la même manière, l'élément de support 16 peut présenter une gorge de fixation s'étendant à l'arrière du roulement 20 et apte à recevoir un organe de blocage. L'organe de blocage est agencé par déformation élastique dans la gorge de fixation de l'élément de support 16 et permet de limiter le déplacement axial du roulement 20 vers l'arrière. Dans un mode de réalisation intermédiaire, l'une des bagues externe et interne est emmanchée à force ou collée tandis que l'autre bague est maintenue axialement par un organe de blocage logé dans une gorge.

L'élément de support 16 est, par exemple, métallique. Il peut notamment être en matière moulable, en étant par exemple en aluminium ou en alliage à base d'aluminium. Il est de préférence en matière amagnétique.

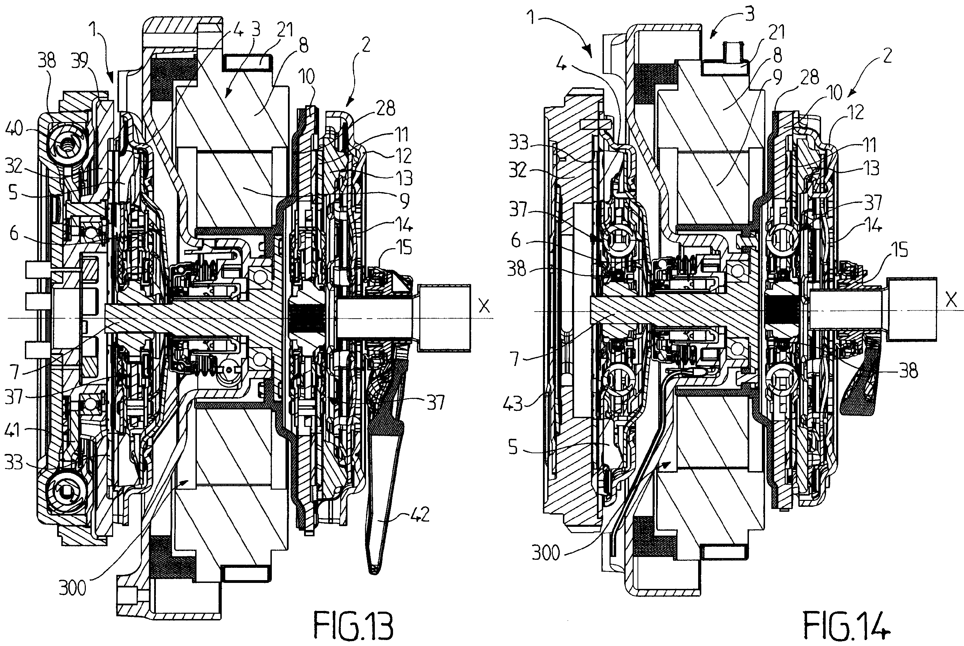

Dans un mode de réalisation, l'élément de support 16 présente un circuit de refroidissement 21 pour refroidir le stator 9. Pour cela, il est possible de réaliser, par moulage en sable, une forme annulaire dans la paroi périphérique externe 18. Ce circuit de refroidissement 21 présente une entrée et une sortie permettant la circulation d'un liquide de refroidissement. De manière alternative, telle qu'illustré sur les figures 13, 14 et 15, il est également possible d'obtenir un tel circuit de refroidissement au moyen d'un tube rapporté.

Le rotor 9 est supporté par un moyeu 22. Le moyeu 22 comporte une jupe axiale 26 de support du rotor 9. La jupe axiale 26 comporte, sur sa surface extérieure, un épaulement radial 27 définissant une surface d'appui du rotor 9. Le rotor 9 comporte un paquet de tôles. Il est monté par frettage sur la surface externe de la jupe axiale 26. Ainsi, on monte à chaud le paquet de tôles par emmanchement sur la surface externe de la jupe axiale 26 jusqu'au contact avec l'épaulement radial 27. Dans un autre mode de réalisation, le rotor 9 peut être emmanché à force sur la surface externe de la jupe axiale 26.

Le moyeu 22 comporte, en outre, un voile radial annulaire 28, s'étendant à l'arrière du stator 8 et du rotor 9 et portant le plateau de réaction 10 de l'embrayage 2, côté boîte de vitesses. Le plateau de réaction 10 est fixé au voile radial annulaire 28 en dehors de la zone annulaire de frottement du plateau de réaction 10, destiné à coopérer avec les garnitures de friction du disque de friction 11 en position embrayée. Le plateau de réaction 10 est, ici, fixé sur le voile radial annulaire 28, dans une zone périphérique externe, s'étendant radialement au-delà de la zone de frottement.

Le plateau de réaction 10 est fixé à distance axiale de la machine électrique 3. Un espace est ainsi ménagé entre le plateau de réaction 10 et la machine électrique 3.

La jupe axiale 26 présente une portion axiale 29 s'étendant entre l'épaulement radial 27 d'appui du rotor et le voile radial annulaire 28 de sorte à définir un interstice entre le voile annulaire 28 et le rotor 9. En d'autres termes, la zone de raccordement du voile annulaire 28 à la jupe axiale 26 est décalée axialement par rapport au rotor 9 de sorte à éviter les fuites magnétiques.

Le voile annulaire 28 comporte une portion cambrée 30 s'étendant entre deux portions planes annulaires. Cette portion cambrée 30 permet notamment de conférer au voile annulaire 28 une flexibilité permettant de découpler en flexion le rotor 9 du plateau de réaction 10.

Le moyeu 22 de support du rotor 8 est fixé à l'arbre intermédiaire 7. Pour ce faire, l'extrémité arrière de l'arbre intermédiaire 7 comporte une collerette 23 venant en appui axial contre une bride interne 25 formée dans le moyeu 22 de support et s'étendant radialement vers l'intérieur de la jupe axiale 26. Des rivets 24 permettent de fixer la collerette 23 de l'arbre intermédiaire 7 et la bride interne 25 du moyeu 22. Ainsi, le rotor 9 est centré par rapport à l'élément de support 16 et par conséquent par rapport au stator 8 par l'intermédiaire du roulement 20.

Le moyeu 22 est réalisé en tôle d'acier ou de fer. La réalisation dudit moyeu 22 en tôle permet, d'une part, de faciliter le frettage du rotor 9 sur le moyeu 22 et, d'autre part de limiter la conduction des calories produites par frottement par l'embrayage 2, vers le rotor 9.

Afin de limiter la conduction des calories générées par le frottement de l'embrayage 2, il est également possible de prévoir une couche supplémentaire de matériau à faible conductivité thermique disposée à l'interface entre le voile radial annulaire 28 et le plateau de réaction 10. La couche supplémentaire peut être une couche de plastique, à base de Polyphénylène sulfide ou de polyamide 6-6, par exemple, ou une nappe de papier de type « DMD » constitué d'un film polyester et d'un revêtement non-tissé imprégné recouvrant chacune des faces du film polyester.

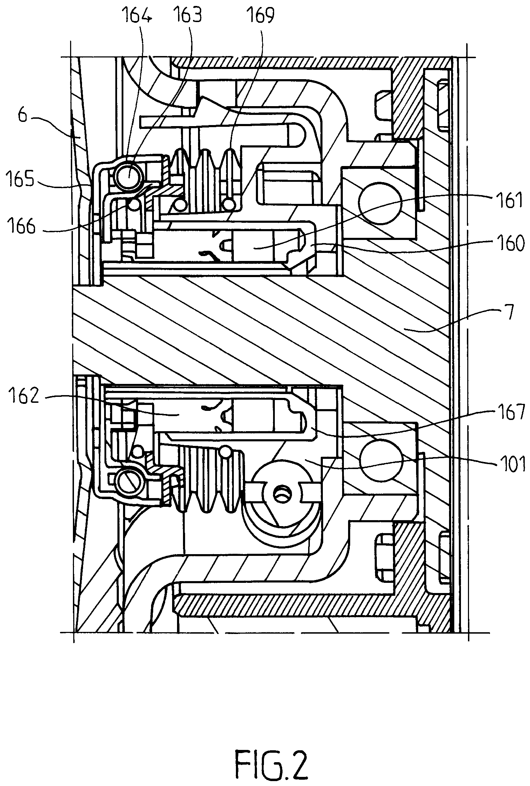

En référence avec les figures 2 à 10, il sera désormais décrit, de manière détaillée, une butée d'embrayage 100 pour l'actionnement de l'embrayage 1, côté moteur, ainsi que son assemblage à l'intérieur du logement 201 de l'élément de support 16.

La butée d'embrayage 100 est une butée à commande par fluide. Ce fluide peut être un fluide hydraulique ou un fluide pneumatique. Le fluide de commande est usuellement de l'huile. Dans un mode de réalisation, la butée peut également être une butée à commande électrique.

La butée 100 est concentrique à l'axe X et traversée par l'arbre intermédiaire 7. La butée 100 comporte deux parties en relation de cylindre piston, c'est-à-dire une partie fixe 160, délimitant une cavité annulaire borgne d'orientation axiale, et un piston 162 monté mobile axialement par rapport à la partie fixe 160. Le piston 162 pénètre dans la cavité pour définir avec celle-ci une chambre de travail 161 de volume variable. La cavité communique par un canal avec une arrivée de connexion à un tuyau d'alimentation en fluide relié à un maître-cylindre. Le maître-cylindre est actionné par un actionneur à moteur électrique ou un générateur de pression/volume commandé selon des programmes prédéterminés par un calculateur. La chambre de travail 161 est donc admise à être pressurisée ou dépressurisée.

Dans le mode de réalisation représenté, la partie fixe 160 de la butée 100 comporte un tube guide 167 et un corps 101, extérieur, entourant le tube-guide 167. Le tube-guide 167, par exemple métallique, définit la cavité annulaire dans laquelle le piston 162 est mobile et guide ainsi le piston 162. Le tube guide 167 est assemblé au corps 101. Le tube-guide 167 est traversé par l'arbre intermédiaire 7.

De manière alternative, la partie fixe 160 pourra être en une seule pièce en matière moulable, en matière plastique par exemple, le corps 101 définissant alors la cavité annulaire dans laquelle le piston est mobile 162.

La butée d'embrayage 100 est ici du type auto-centreuse. Elle comporte un roulement à billes 163 avec une bague tournante 164 profilée pour un contact ponctuel avec les extrémités internes des doigts 165 du diaphragme 6 et une bague non tournante 166 attelée axialement au piston 162. Pour plus de précisions sur l'autocentrage de la butée on se reportera par exemple au document FR-A-2619880. Un soufflet d'étanchéité 169 s'étend entre le corps 101 et la bague non-tournante 166. En variante, la butée est de type tirée, la butée 100 agissant alors en tirant sur les doigts du diaphragme.

Dans un mode de réalisation, la butée d'embrayage 100 est équipée d'un capteur de position permettant de contrôler la position du piston 162 par rapport au corps 101. Le capteur de position peut être un capteur intégré au piston ou être installé dans l'actionneur de commande de la butée d'embrayage 100.

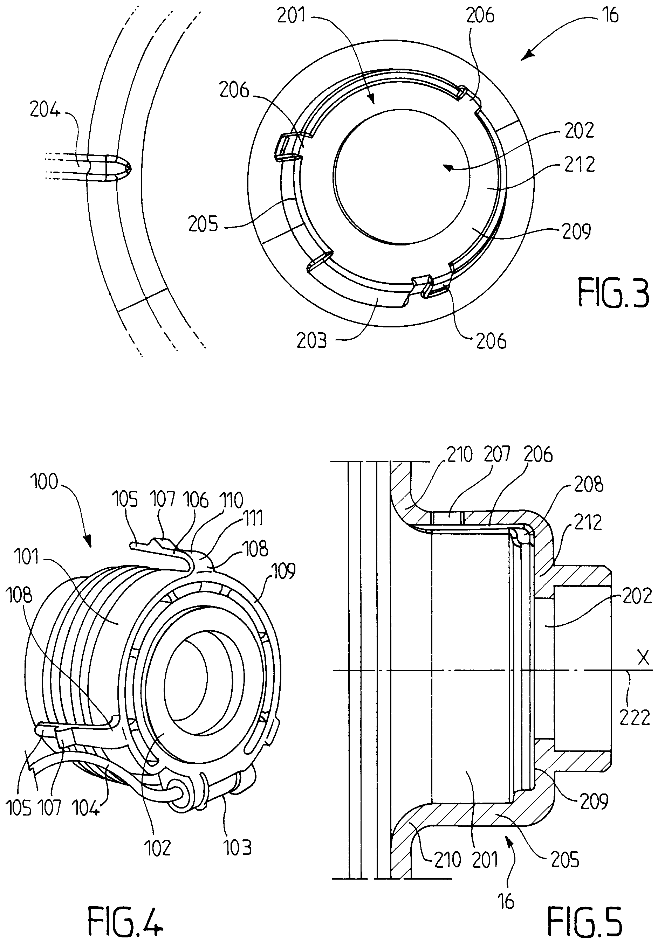

En référence aux figures 3 à 5, nous allons décrire le logement 201 de l'élément de support 16, destiné à recevoir au moins partiellement la butée d'embrayage 100, de l'embrayage 1, côté moteur.

Comme mentionné précédemment, le logement 201 est défini par un fond 212 et une jupe axiale 205. Le fond 212 est percé par un alésage 202 permettant le passage de l'arbre intermédiaire 7. L'axe de l'alésage 202 est coaxial à l'axe X de rotation de l'ensemble.

La jupe axiale 205 comprend un évidement 203 pour permettre le passage d'un embout de raccordement 103 à un tuyau d'alimentation en fluide de commande de la butée 100. Par ailleurs, le voile interne 19 de l'élément de support 16 comprend un évidement 204 pour le passage du tuyau d'alimentation en fluide de la butée d'embrayage 100. L'évidement 204 dédié au passage du tuyau de commande est légèrement surdimensionné par rapport au diamètre du tuyau d'alimentation.

Pour faciliter la mise en place de la butée d'embrayage 100, la jupe axiale 205 comporte des rainures de guidage 206 destinées à coopérer avec des pattes élastiques de verrouillage 106, décrites par la suite. Les rainures de guidage 206 sont parallèles à une génératrice de la jupe axiale 205.

Dans un mode de réalisation, les rainures de guidage 206 servent également de détrompeurs permettant de n'autoriser qu'une seule position angulaire de montage de la butée d'embrayage 100 dans le logement 201. Ainsi, les rainures de guidage 206 permettent de positionner angulairement la butée d'embrayage 100 par rapport au logement 201 de sorte à positionner l'embout de raccordement 103 de la butée d'embrayage 100 en vis-à-vis de son évidement 203 respectif. Pour obtenir ce résultat, la répartition angulaire des rainures 206 est irrégulière. En d'autres termes, il existe au moins deux distances angulaires différentes entre deux rainures 206 adjacentes.

Pour faciliter l'insertion des pattes élastiques de verrouillage 106 dans le logement 201, l'extrémité avant des bords longitudinaux des rainures 206 peuvent comprendre des chanfreins permettant de rattraper un écart de positionnement de quelques degrés lors de l'insertion des pattes élastiques de verrouillage 106 dans les rainures 206. De même, les rainures 206 présente une largeur et/ou une profondeur plus importante à leur extrémité avant qu'à leur extrémité arrière afin de faciliter l'insertion des pattes élastiques de verrouillage 106. Dans un tel agencement, les variations de la pente des bords longitudinaux ou du bord radialement extérieur peut être linéaire ou non linéaire.

La jupe axiale 205 comporte également des cavités 207 permettant d'accueillir une protubérance 107 portée par une patte élastique 106 de verrouillage. Les cavités 207 s'étendent ici dans le fond des rainures de guidage 206.

Afin de maintenir la butée d'embrayage 100 angulairement et éviter toute rotation de la butée d'embrayage 100 par rapport au logement 201 dû au couple de traîné du roulement de butée, le logement 201 est pourvu, à proximité de son fond de butées tangentielles 208 destinées à coopérer avec les pattes élastiques 106 de verrouillage. Dans le mode de réalisation, les surfaces de butée des butées tangentielles 208 bordant chaque rainure sont parallèles deux à deux et symétriques par rapport à un plan médian passant par l'axe X.

À l'entrée de la jupe axiale, l'arête formée entre la jupe axiale 205 et le voile interne 19 est cassée par un congé 210. Dans un autre mode de réalisation, l'arête est cassée par un chanfrein. Ces agencements permettent de faciliter l'insertion de la butée 100 d'embrayage à l'intérieur du logement 202.

Enfin, le fond 212 du logement 201 comprend une face d'appui 209 permettant l'appui axial de la butée d'embrayage 100.

La figure 4 est une vue en perspective d'un exemple de réalisation d'une butée d'embrayage 100 illustrant des moyens de fixation de la butée d'embrayage 100 dans le logement 201.

Le corps 101 ou boîtier est pourvu de pattes élastiques 106 de verrouillage. Une patte élastique 106 comprend une extrémité proximale de liaison au corps 101 et une extrémité distale libre. La patte élastique 106 présente une forme de L et comprend une portion d'orientation radiale 108 s'étendant à partir de son extrémité proximale et une portion d'orientation axiale 110. L'extrémité proximale de liaison au corps 101 est située à proximité de l'extrémité arrière du corps 101 et la portion d'orientation axiale 110 s'étend vers l'avant, c'est-à-dire dans une direction opposée au fond 212 du logement 201. La patte élastique 106 est pourvue d'une protubérance 107 apte à coopérer avec une cavité de verrouillage 207 respective. La protubérance 107 s'étend radialement vers l'extérieur, à partir de la portion d'orientation axiale 110.

La patte élastique 106 ainsi constituée possède une capacité de flexion radiale autour de la jonction entre la portion d'orientation radiale 108 et la portion d'orientation axiale 110. Cette flexibilité radiale de la patte élastique 106 permet à la protubérance 107 de se déplacer radialement. Ainsi, lors de l'assemblage de la butée d'embrayage 100 sur l'élément de support 16, la patte élastique 106 se déforme radialement vers l'intérieur par contact de la protubérance 107 avec la jupe axiale 205 puis est rappelée vers l'extérieur, vers une position de verrouillage, lorsque la protubérance 107 vient se loger dans sa cavité 207 respective.

Notons que le corps 101 est avantageusement réalisé dans une matière adapté pour conférer aux pattes élastiques 106 une capacité de déformation élastique suffisante. À titre d'exemple, le corps 101 pourra notamment être réalisé en matière plastique, tel que le polyamide 6-6 éventuellement complété par des charges.

Par ailleurs, les pattes élastiques 106 sont agencées pour permettre à un opérateur de déverrouiller, la fixation de la butée d'embrayage 100 afin de l'extraire de son logement 201, lors d'une opération de maintenance par exemple. Pour ce faire, la protubérance 107 s'étend dans une portion médiane de la patte élastique 106. Ainsi, un appui radialement vers l'intérieur sur l'extrémité distale libre de la patte élastique 106 déplace la protubérance 107 de sa position verrouillée, dans laquelle elle s'étend à l'intérieur de la cavité de verrouillage 207, vers une position libérée dans laquelle elle s'étend radialement en dehors de la cavité 207. En d'autres termes, la portion distale de la patte élastique 106 qui s'étend au-delà de la protubérance 107 constitue une languette 105 de déverrouillage permettant à un opérateur d'agir sur le débattement radial de la patte 106. Ainsi, cet opérateur peut déverrouiller facilement la butée d'embrayage 100 pour pouvoir l'extraire de son logement 201.

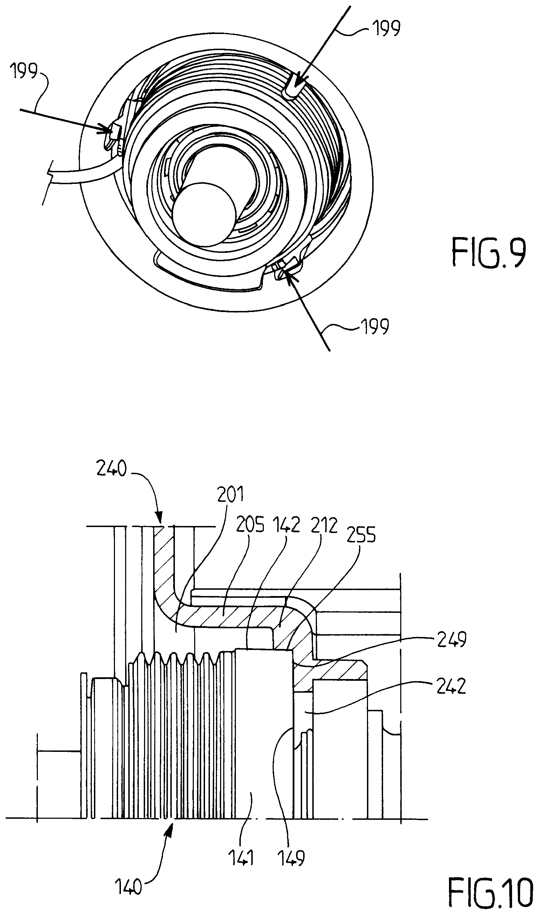

Dans le mode de réalisation représenté, la protubérance 107 présente une forme de dent. La face arrière 117 est inclinée de sorte à faciliter l'insertion de la butée d'embrayage 100 dans le logement 202. L'inclinaison par rapport à l'axe X est de préférence inférieure à 45°. La face avant 127, du côté de l'extrémité distale, présente également une inclinaison dont la fonction sera détaillée à la figure 9. L'inclinaison de la face avant 127 par rapport à l'axe X est de préférence supérieure à 45°.

Enfin, le corps 101 comprend un embout de raccordement 103 pour permettre le raccord à une alimentation en fluide de commande de la butée d'embrayage 100. Dans ce mode de réalisation, la commande est réalisée à l'aide d'un fluide pneumatique ou hydraulique acheminé par une canalisation, ici un tuyau d'alimentation 104 souple ou rigide.

Le corps 101 comprend un épaulement 109 pour assurer l'appui axial de la butée d'embrayage 100 contre le fond 212 du logement 201. Le corps 101 comprend également une réduction cylindrique 102 coopérant avec l'alésage 202 formé dans le fond 212 du logement 201. Cette réduction sert à positionner la butée d'embrayage 100 sur l'élément de support 16. Pour assurer ce centrage, cette réduction cylindrique 102 est coaxiale avec l'axe de référence X.

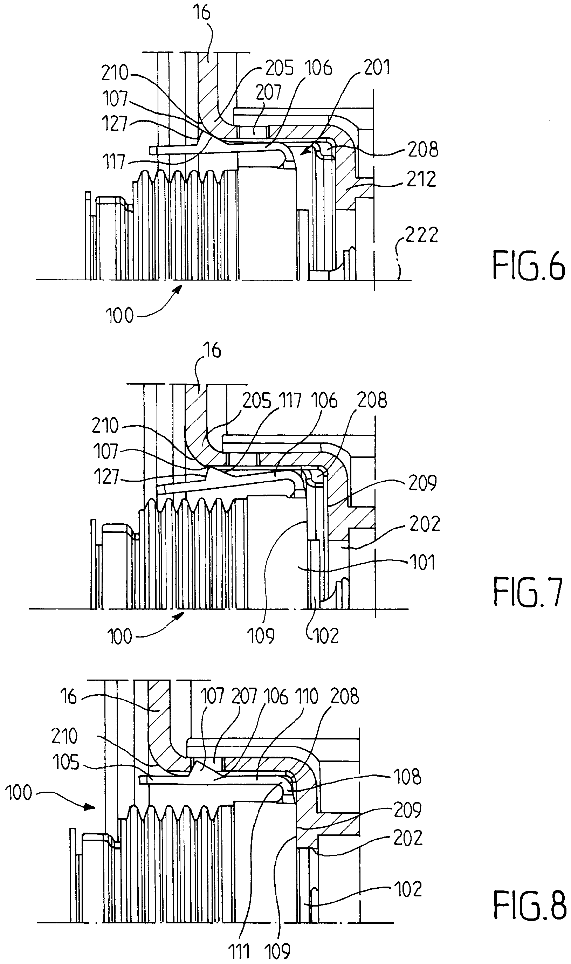

Les figures 6 à 8 représentent les trois étapes du montage de la butée d'embrayage 100.

Dans une première étape, la butée d'embrayage 100 est présentée face au logement 201, en respectant le détrompage réalisé par les pattes élastiques 106 et les rainures 206. Lorsque la protubérance 107 entre en contact avec l'élément de support 16, le congé 210, à l'entrée du logement 202, appuie sur la face avant 117 de la protubérance. L'inclinaison de la face avant 117 de la protubérance 107 combinée avec la forme du congé 210 permet de déformer progressivement la patte élastique 106 pour rabattre l'extrémité distale vers l'axe central de la butée 100 et favoriser l'insertion de celle-ci. La forme de l'entrée du logement ainsi que l'inclinaison de la face avant 117 de la protubérance 107 contribuent donc à faciliter l'insertion sans nécessité une pression de l'opérateur sur les pattes élastique 106.

Dans un second temps, la butée d'embrayage 100 est poussée selon l'axe X de référence jusqu'au fond du logement 201 de telle sorte que la réduction cylindrique 102 pénètre dans l'alésage 202, puis que l'épaulement 109 soit en appui sur la face d'appui 209. Pour faciliter l'insertion de la réduction cylindrique 102 dans l'alésage 202, la réduction cylindrique et l'alésage 202 comprennent des chanfreins coniques complémentaires.

Pendant cette phase d'insertion, la patte 106 reste en position fléchie radialement, sous l'effort exercé par le fond de la rainure 206 de la jupe axiale 205.

Au cours de la dernière étape, lorsque la butée d'embrayage 100 a atteint sa position montée, en butée contre le fond 212 du logement, la protubérance 107 est en vis-à-vis de la cavité 207. La patte 106, grâce à son élasticité, retrouve sa forme de repos et la protubérance 107 pénètre dans la cavité 207 assurant une immobilisation axiale de la butée d'embrayage 100. En d'autres termes, la patte 106 de verrouillage sert à clipser la butée d'embrayage 100 dans le logement 201 de l'élément support 16.

Dans cette position, la portion d'orientation radiale 108 est en appui contre la butée tangentielle 208 pour maintenir angulairement la butée d'embrayage 100. La butée tangentielle 208 permet d'éviter que le maintien angulaire ne s'effectue entre la protubérance 107 et sa cavité 207 car, compte tenu du positionnement de la protubérance 107, un effort tangentiel exercé au niveau de la protubérance génèrerait un effet de bras de levier et, donc, une torsion au niveau de la base des pattes élastiques 106 de nature à les rompre.

Dans la position montée, l'extrémité distale des pattes élastiques 106 dépasse axialement de la jupe axiale 205. Une telle disposition facilite les manipulations de déverrouillage. À titre de variante, la patte élastique 106 est plus courte et ne fait pas saillie en dehors du logement 201 Cette disposition est notamment réalisée en cas de problème d'encombrement.

Pour le démontage de la butée d'embrayage 100, en référence à la figure 9, il faut exercer un effort radial 199 sur l'extrémité distale formant languette 105 des pattes élastiques 106 depuis l'extérieur de la butée 100 vers son axe central de sorte à déplacer les protubérances 107 vers leur position libérée dans laquelle elles s'étendent en dehors de leur cavité 207. La face avant 127 de la protubérance 107 présente une inclinaison qui facilite le déverrouillage lorsqu'un effort radial 199 est exercé. Une fois que la butée n'est plus immobilisée dans son logement 201 par les protubérances 107, il suffit de l'extraire en la tirant vers l'avant de la jupe axiale 205.

La figure 10 représente un autre exemple de réalisation de la fonction centrage et appui du corps 101 par rapport au logement 201. Sur la figure 9, les éléments identiques à ceux des figures 3 à 9 portent le même chiffre de référence. Les éléments analogues modifiés portent le même chiffre de référence augmenté de 40.

Dans cette réalisation, le fond 212 du logement 201 comporte un épaulement formant un alésage 255 de centrage et une surface radial 249 d'appui axial du corps 141 de la butée 100. L'enveloppe 142 extérieur du corps 141 de la butée d'embrayage 140 est cylindrique pour assurer la fonction de centrage avec l'alésage 255 présent au fond 212 du logement 201. Comme pour le mode de réalisation précédent, l'enveloppe 142 cylindrique et l'alésage 255 sont coaxiaux avec l'axe X de l'ensemble. Pour assurer l'arrêt axial, le corps 141 comprend à son extrémité arrière, une surface d'appui 149 qui est en butée sur le fond de l'alésage 249.

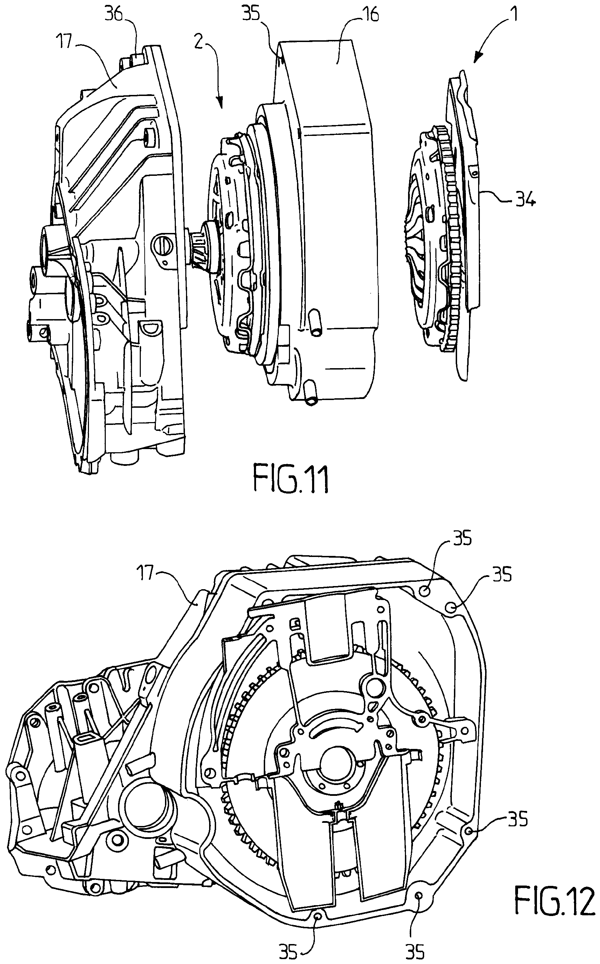

Les figures 11 et 12 illustrent le procédé de montage d'un ensemble de transmission.

L'embrayage 1, côté moteur, est fixé sur le bloc-moteur 34. Pour ce faire, le volant moteur portant le plateau de réaction 32 est fixé sur le vilebrequin du moteur à combustion via des vis puis le mécanisme ainsi que le disque de friction 33 de l'embrayage 1, côté moteur, sont montés sur le volant moteur. De manière alternative, il est également possible de pré-monté un module comportant un volant moteur, un mécanisme d'embrayage et un disque de friction 33 puis de monter ledit module sur le vilebrequin du moteur à combustion.

Par ailleurs, un module comportant au moins un élément de support 16, la butée d'embrayage 100 pour l'actionnement de l'embrayage 1, côté moteur, l'arbre intermédiaire 7, une machine électrique 3 et le plateau de réaction de l'embrayage 2, côté boîte de vitesses, est pré-monté. Le pré-montage d'un tel module permet de faciliter le montage de l'ensemble lors de l'assemblage de la transmission avec le bloc-moteur.

Dans le mode de réalisation représenté, le module pré-monté comporte en outre le mécanisme, c'est-à-dire le couvercle 12, le plateau de pression 13, et le diaphragme 14, ainsi que le disque de friction 11 de l'embrayage 2, côté boîte de vitesses.

Ce module pré-monté est manipulable et facilement transportable, les éléments dudit module étant fixés axialement et centrés les uns par rapport aux autres, notamment par l'intermédiaire du roulement 20.

L'élément de support 16 comporte des orifices de fixation 35 traversant ledit élément de support 16 de part en part. Ces orifices de fixation 35 débouchent en vis-à-vis d'orifices 36 formés dans la carter 17 de la boîte de vitesses et en vis-à-vis d'orifices, non représentés, formés sur le bloc-moteur ou sur une entretoise de raccordement au bloc-moteur. Ainsi, des vis de fixation, non représentés, sont insérées au travers desdits orifices 35, 36 de sorte à solidariser la boîte de vitesses, le module pré-monté et le bloc-moteur.

Dans un mode de réalisation, le module pré-monté est pré-positionné sur le bloc-moteur, au moyen de pions ou manchons de centrage, par exemple, puis le carter 17 de la boîte de vitesses est rapporté contre l'élément de support 16 et les vis sont insérées au travers des orifices 36 du carter, des orifices 35 de l'élément de support 16 et des orifices du bloc moteur afin de solidariser l'ensemble.

Dans un mode de réalisation alternatif, il est également possible de pré-positionner le module pré-monté sur le carter 17 de la boîte de vitesses puis de rapporter la boîte de vitesses et le module pré-monté sur le bloc-moteur.

Dans un autre mode de réalisation, un premier groupe d'orifices de fixation 35 peut être utilisé pour le passage de vis destinées à la fixation du module pré-monté sur la boîte de vitesse alors qu'un second groupe d'orifices de fixation 35 peut être utilisé pour le passage de vis destinées à la fixation du module pré-monté sur le bloc-moteur 34.

Dans un mode de réalisation, il est également possible d'utiliser des goujons présentant deux extrémités filetées afin de permettre un montage du module pré-monté sur le carter 17 de la boîte de vitesses via la première extrémité desdits goujons et sur le bloc-moteur 34 via la seconde extrémité desdits goujons.

Comme représenté sur les figures 13, 14 et 15, les disques de frictions 11, 33 sont avantageusement équipés d'amortisseurs de torsion 37. Typiquement, un tel amortisseur de torsion 37 comporte deux rondelles de guidage solidaires en rotation d'un disque de support des garnitures de friction et formant l'élément d'entrée de l'amortisseur. Les rondelles de guidages sont disposées de part et d'autre d'un voile formant l'élément de sortie de l'amortisseur. Des organes élastiques à action circonférentielle, tels que des ressorts hélicoïdaux, sont montés dans des fenêtres de logement pratiquées, en vis-à-vis, dans les rondelles de guidage et dans le voile. Les extrémités des ressorts hélicoïdaux sont en appui contre les bords radiaux des fenêtres de logement de telle sorte que lesdits ressorts hélicoïdaux sont aptes à transmettre un couple entre les rondelles de guidage et le voile.

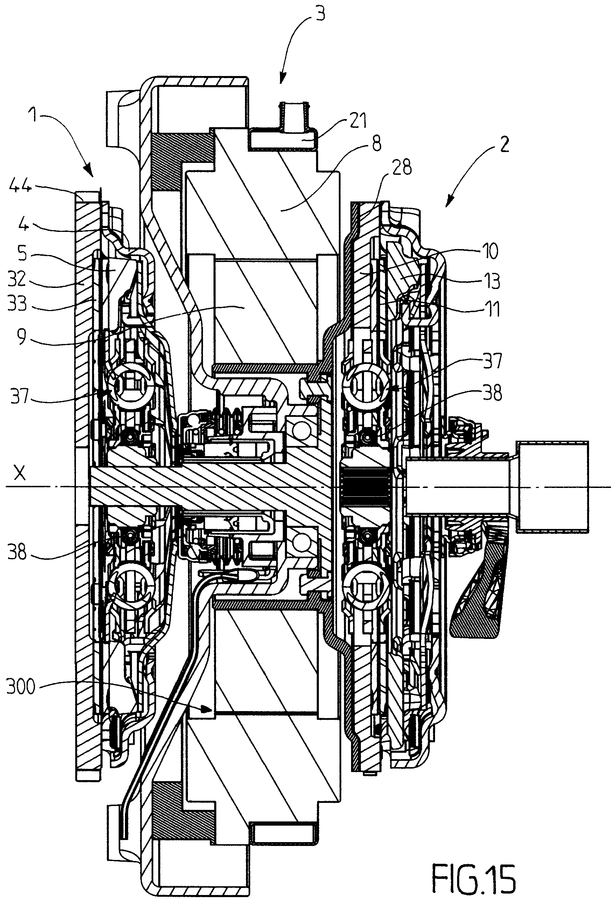

Les disques de friction 11, 33 peuvent également être équipés d'un pré-amortisseur 38 destiné à filtrer les vibrations engendrées par les acyclismes du moteur à combustion au régime de ralenti. De tels pré-amortisseurs, notamment représentés sur les figures 14 et 15 présentent des ressorts hélicoïdaux de faible taille, présentant des raideurs plus faibles que celles des ressorts d'un amortisseur principal.

Dans le mode de réalisation représenté sur la figure 13, le plateau de réaction 32 de l'embrayage 1, côté moteur, constitue la masse secondaire 39 d'un double volant amortisseur. Le double volant amortisseur comporte un volant primaire 38 et un volant secondaire 39, coaxiaux, mobiles en rotation l'un par rapport à l'autre à la faveur d'un palier tel qu'un roulement à billes. Le volant primaire 38 est destiné à être fixé sur le vilebrequin du moteur thermique, par exemple à l'aide de vis. Le volant primaire 38 et le volant secondaire 39 sont couplés en rotation grâce à des moyens d'amortissements. Les moyens d'amortissement sont typiquement des ressorts hélicoïdaux 40 disposés de façon circonférentielle dans une chambre annulaire formée dans le volant primaire 38 et remplie d'un agent de lubrification. Les ressorts hélicoïdaux 40 sont en appui à leurs extrémités sur des bossages des parois latérales de la chambre annulaire et sur des pattes radiales d'un voile annulaire 41 fixé par des rivets au volant secondaire 39.

Par ailleurs, la figure 13 illustre une fourchette d'embrayage 42 apte à pivoter pour déplacer la butée de l'embrayage 2, côté boîte de vitesses.

Dans le mode de réalisation de la figure 14, le plateau de réaction 32 de l'embrayage 1, côté moteur, est fixé à une tôle annulaire flexible 43 qui est destinée à être fixé sur le vilebrequin du moteur thermique, via des vis par exemple. Une rondelle de Belleville agit entre le plateau de réaction 2 et la tôle flexible 43. Un tel volant est couramment désigné par volant flexible et permet d'amortir les excitations, dans la direction axiale, du vilebrequin.

Dans le mode de réalisation de la figure 15, le plateau de réaction 32 de l'embrayage 1, côté moteur, est porté par un volant moteur rigide destiné à être fixé sur le vilebrequin du moteur.

On notera que dans les modes de réalisation des figures 1 et 15, le volant moteur présente, sur sa périphérie externe une couronne dentée 44 destinée à coopérer par engrènement avec le pignon d'un démarreur. Un tel démarreur pourra être utilisé, de manière complémentaire à la machine électrique 3, pour démarrer le moteur à combustion thermique, notamment par grand froid, comme décrit dans le document FR 2 797 472 auquel on se reportera pour plus d'informations à ce sujet.

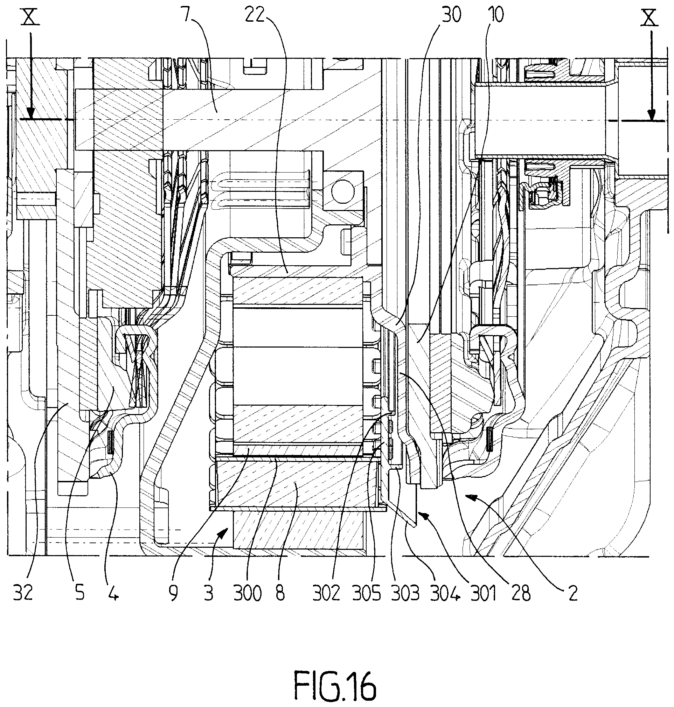

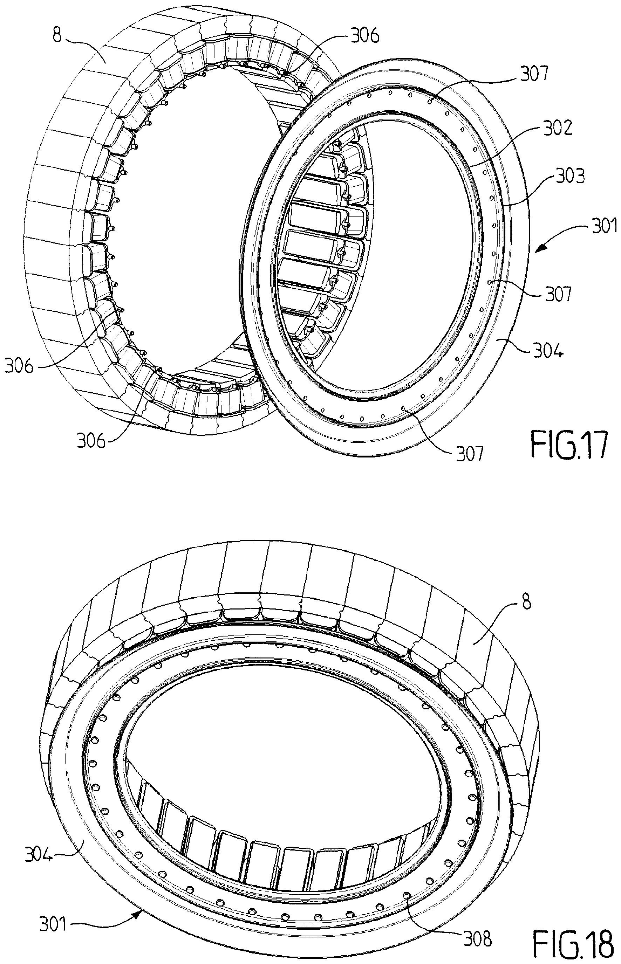

Comme mentionné précédemment, le plateau de réaction 10 est axialement distant des éléments de la machine électrique 3, créant un espace axial entre le plateau de réaction 10 et la machine électrique 3. En référence aux figures 16 et 17, on va maintenant décrire un flasque 301 anti-poussière destiné à protéger la machine électrique des particules de poussière, provenant notamment de l'embrayage 2 et susceptible de s'introduire via l'espace axial susmentionné. Ces particules sont notamment générées lors du frottement des garnitures de friction du disque de friction 11 entre les plateaux de réaction 10 et de pression 13.

Ce flasque 301 est destiné à empêcher les poussières d'accéder à l'espace annulaire d'entrefer 300 entre le rotor 9 et le stator 8. En effet, si de telles particules pénétraient dans l'espace annulaire d'entrefer 300, elles pourraient endommager le rotor 9 et le stator 8 par abrasion en jouant le rôle de grains abrasifs entre le stator 8, pièce fixe et le rotor 9, pièce en mouvement.

Pour éviter cela, le flasque 301 est disposé dans l'espace entre la machine électrique 3 et le plateau de réaction 10 et plus particulièrement entre le plateau de réaction 10, d'un côté, et l'ensemble rotor 9 et stator 8, de l'autre. Le flasque 301 a la forme d'une rondelle dont la périphérie externe et la périphérie interne sont définies par deux cercles concentriques.

Le flasque 301 est fixé sur le stator 8. Sa périphérie interne s'étend radialement vers l'intérieur au-delà de l'espace annulaire d'entrefer 300 de sorte à le recouvrir. Le flasque 301 comporte une joue d'orientation radiale et deux lèvres 302 et 303 qui s'étendent axialement en direction du plateau de réaction 10. Les lèvres 302 et 303 obstruent le passage des poussières dans l'espace entre la machine électrique 3 et le plateau de réaction 10. De manière avantageuse, la distance axiale entre l'extrémité des lèvres 302, 303 et le plateau de réaction 10 ou, le voile radial annulaire 28 supportant le plateau de réaction 10, lorsque le voile radiale annulaire 28 est disposé entre le plateau de réaction 10 et la machine électrique 3, est limitée à un jeu fonctionnel, typiquement inférieure à 5 mm.

Comme le montre la figure 16, la distance axiale entre le voile radial annulaire 28 et la machine électrique 3 n'est pas constante. L'intervalle ou distance axiale entre le voile radial annulaire 28 et le stator 8 est supérieur à l'intervalle entre le voile radial annulaire 28 et le rotor 9. La lèvre interne 302 est disposée au niveau du rotor 9 dans le plus petit intervalle, alors que la lèvre externe 303 est positionnée dans l'intervalle le plus grand au niveau du stator 8. La dimension axiale de cette lèvre externe 303 est supérieure à la dimension du plus petit intervalle. Selon cette disposition, les lèvres internes 302 et externe 303 se trouvent de part et d'autre de l'espace annulaire d'entrefer 300 et forment des chicanes obstruant davantage le passage de poussière dans l'espace entre le plateau de réaction 10 et la machine électrique 3.

Le flasque 301 comprend également un déflecteur 304 disposé à la périphérie externe de la joue 305 et formant un rebord tronconique, évasé vers l'extérieur, en direction de l'embrayage 2. Ce déflecteur permet de confiner les poussières générées par l'embrayage 2, côté boîte de vitesses, entre la boîte de vitesses et la machine électrique 3.

En se rapportant aux figures 17 et 18, on va maintenant décrire la fixation du flasque 301 sur la machine électrique 3 et plus précisément sur une pièce fixe de la machine électrique 3 : le stator 8.

Pour cela, le stator 8 est équipé de picots 306 faisant saillie axialement de sa partie latérale, côté boîte de vitesse. Les picots 306 sont configurés pour coopérer avec des trous 307 débouchant, ménagés sur le flasque 301. Lors de l'étape d'assemblage, les trous 307 et les picots 306 servent à positionner le flasque 301 par rapport au stator 8. Ainsi, le flasque 301 est coaxial avec la machine électrique 3.

Dans un mode de réalisation, les picots 8 sont portés par le corps d'un interconnecteur, qui sera décrit par la suite, permettant de connecter les bobines du stator 8.

Les picots 306 sont régulièrement répartis le long de l'espace annulaire d'entrefer 300. Après l'insertion du flasque 301 sur les picots 306 du stator 8, les picots 306 débordent du flasque 301 par les trous 307. La fixation est, par exemple, obtenue par un assemblage par soudage par ultrason des picots 306 de sorte à obtenir, à l'extrémité 308 des picots, une tête dont les dimensions sont plus importantes que le diamètre du trou 307. Ainsi, le flasque 301 est maintenu, bloqué, de manière non démontable sur le stator 8. Pour permettre ce mode d'assemblage, les picots 306 sont réalisés dans une matière thermofusible, tel qu'un thermoplastique. À titre d'exemple, les picots pourront notamment être en polyamide 6-6.

Dans un mode de réalisation, le flasque 301 est réalisé dans un matériau amagnétique. À titre d'exemple, le flasque 301 peut notamment être réalisé en matière plastique. Un tel flasque permet de limiter les fuites magnétiques vers le plateau de réaction 10 ou vers le voile radial annulaire 28 supportant le plateau de réaction 10 lorsque le voile radiale annulaire 28 est disposé entre le plateau de réaction 10 et la machine électrique 3.

Dans un autre mode de réalisation, le flasque 301 constitue un écran de blindage magnétique entre la machine électrique 3 et l'embrayage 2, côté boîte de vitesses, apte à concentrer les lignes du champ magnétique et limiter le champ de fuite. Pour ce faire, le flasque 301 peut notamment être réalisé dans un matériau plastique associé à des charges métalliques amagnétiques, telles que des particules d'aluminium. Un tel flasque présente de manière avantageuse une susceptibilité magnétique inférieure à 1.10⁻³.

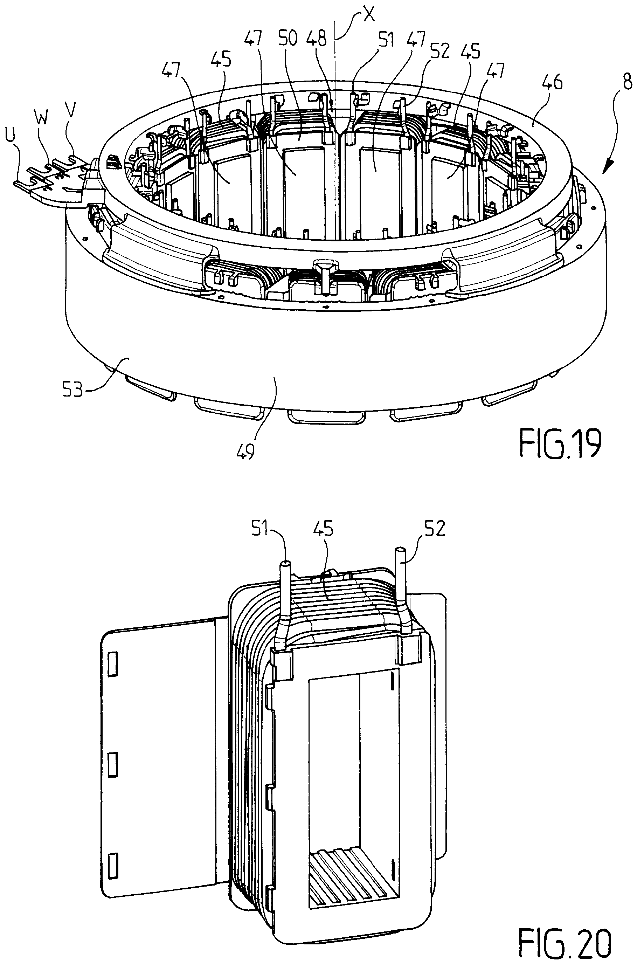

La figure 19 illustre le stator 8 d'une machine électrique 3 susceptible d'équiper l'ensemble de transmission. Le stator appartient ici à une machine électrique tournante polyphasée. Le bobinage du stator 8 est équipé de plusieurs bobines 45 concentriques, ici préformées, et d'un point neutre, dit neutre de la machine, visible par exemple à la figure 1 du document EP 0 831 580. Ce stator est compact et performant du point de vue de la puissance de la machine électrique.

Les bobines 45 sont interconnectées entre elles à l'aide d'un interconnecteur 46 compact comportant plusieurs cadres dont l'un, dit cadre de neutre est relié au neutre de la machine électrique tournante. Ce stator 8 comporte un corps de forme annulaire d'axe confondu avec l'axe X. Ce corps présente des dents 47 réparties régulièrement sur la périphérie interne ainsi que des encoches 48 ouvertes vers l'intérieur, deux encoches 48 consécutives étant séparées par une dent 47. Ces dents 47 sont à bords parallèles deux à deux, une bande de matière, correspondant à la culasse 53 existant entre le fond des encoches 48 et la périphérie externe du corps 49. Le corps 49 est formé par un empilement de tôles annulaires réalisées en matière ferromagnétique, coaxial à l'axe X. Le paquet de tôles est maintenu au moyen de rivets (non représentés) traversant axialement de part en part l'empilement des tôles. Cet empilement permet de réduire les courants de Foucault.

Le stator 8 comporte un interconnecteur 46 avec des terminaux de connexion U, V et W, pour l'interconnexion avec un connecteur de puissance.

Comme cela est visible sur la figure 20, on monte sur les dents 47 du stator des bobines 45 préformées formant le bobinage du stator 8. Ces bobines 45 sont réalisées à partir d'un fil enroulé sur plusieurs tours. Les fils consistent en un fil électriquement conducteur, par exemple en un fil de cuivre et/ou d'aluminium, revêtu d'un isolant électrique, tel que de l'émail. Les fils peuvent être de section circulaire, rectangulaire ou en forme de méplat. Les extrémités 51, 52 de chaque bobine 50 dépassent axialement du bobinage d'un même côté du stator 8, correspondant à la face arrière du stator 8. Chaque bobine 45 comporte une première extrémité 51 appelée "entrée" destinée à être connectée avec les autres entrées de manière alternée pour appartenir à une des phases, présentant chacune un terminal respectivement U, V, W, de la machine et une deuxième extrémité 52 appelée "sortie" destinée à être reliée au neutre de la machine électrique. Pour ce faire, les bobines 45 sont interconnectées entre elles à l'aide de l'interconnecteur 46.

L'interconnecteur 46 comporte dans ce mode de réalisation quatre cadres de forme annulaire s'étendant suivant un plan radial. Les cadres sont électriquement conducteurs en étant par exemple en cuivre ou avantageusement en un autre matériau métallique soudable. Ces cadres sont empilés axialement les uns sur les autres et isolés électriquement entre eux. Chaque cadre porte sur sa périphérie interne des pattes apparentes s'étendant en saillie radiale vers l'intérieur du cadre pour le soudage des extrémités 51, 52 des bobines du stator. De préférence, les cadres sont noyés dans un corps réalisé en matériau électriquement isolant, tel que de la matière plastique. Chaque cadre de phase comporte sur sa périphérie externe un terminal de connexion U, V, W, pour l'interconnexion avec un connecteur de puissance (non représenté) lui-même relié à un onduleur décrit par exemple dans le document EP 0 831 580. En variante l'onduleur est commandé par des signaux comme dans le document FR 2 745 444.

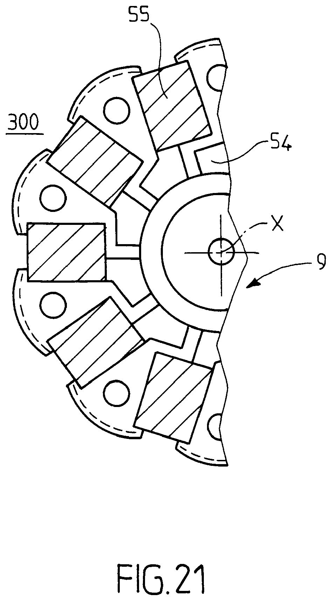

La machine électrique 3 est une machine synchrone. Un rotor 9 à aimants permanents destiné à équiper la machine électrique est illustré sur la figure 21. Le rotor comporte un corps formé d'un paquet de tôles 54 empilées selon la direction axiale. Les aimants permanents 55 sont implantés radialement dans les tôles 54 du paquet de tôles 54, en périphérie externe du rotor 9. Les aimants permanents 55 débouchent dans l'entrefer 300. On parle dans ce cas de rotor à aimants permanents à pôles ouverts. Un tel rotor permet d'obtenir un flux magnétique utile important.

Dans un mode de réalisation, les aimants permanents sont des aimants en ferrite. Plusieurs aimants permanents peuvent être montés dans une même ouverture du paquet de tôles.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Dispositif pour ensemble de transmission de véhicule automobile comprenant :
- une machine électrique (3) comportant un stator (8), un rotor (9) mobile en rotation autour d'un axe X et un moyeu (22) de support du rotor (9) ; et
- un plateau de réaction (10) en fonte, d'un embrayage (2), coaxial audit axe X ;
ledit ensemble étant **caractérisé en ce que** le moyeu (22) de support du rotor (9) est en tôle et comporte une jupe axiale (26) de support du rotor (9) et un voile radial annulaire (28) portant le plateau de réaction (10) en fonte et **en ce que** un espace axial est ménagé entre la machine électrique (3) et le plateau de réaction (10).

2. Dispositif selon la revendication 1, dans lequel le rotor (9) est fixé sur une surface externe de la jupe axiale (26) du moyeu (22).

3. Dispositif selon la revendication 2, dans lequel le rotor (9) comporte un paquet de tôles fixé par frettage sur la surface externe de la jupe axiale (26).

4. Dispositif selon la revendication 2 ou 3, dans lequel la jupe axiale (26) comporte sur sa surface externe un épaulement radial (27) d'appui du rotor (9).

5. Dispositif selon la revendication 4, dans lequel la jupe axiale (26) présente une portion axiale (29) s'étendant entre l'épaulement radial (27) d'appui du rotor (9) et le voile radial annulaire (28) de sorte à définir un interstice entre le voile radial annulaire (28) et le rotor (9).

6. Dispositif selon l'une quelconque des revendications 1 à 5, dans lequel le voile radial annulaire (28) comporte deux portions planes annulaires raccordées par une portion cambrée (30).

7. Dispositif selon l'une quelconque des revendications 1 à 6, dans lequel le plateau de réaction (10) est fixé au voile radial annulaire (28) dans une zone périphérique s'étendant radialement au-delà d'une zone de frottement du plateau de réaction (10) destinée à coopérer avec un disque de friction (11) en position embrayée.

8. Dispositif selon l'une quelconque des revendications 1 à 6, dans lequel le plateau de réaction (10) est fixé au voile radial annulaire (28) dans une zone périphérique s'étendant radialement dans la zone de frottement du plateau de réaction (10) destinée à coopérer avec un disque de friction (11) en position embrayée.

9. Dispositif selon l'une quelconque des revendications 1 à 8, comportant un arbre intermédiaire (7) passant au travers d'une ouverture centrale du rotor (9) et comprenant une première extrémité cannelée destinée à coopérer avec un moyeu d'un disque de friction (32) d'un autre embrayage (1) et une seconde extrémité pourvue d'une collerette (23), dans lequel le moyeu (22) de support du rotor (9) comporte une bride interne (25) s'étendant radialement vers l'intérieur de la jupe axiale (26) fixée à ladite collerette (23) de l'arbre intermédiaire (7).

## Patentansprüche

1. Vorrichtung für Kraftfahrzeug-Getriebeanordnung, die Folgendes umfasst:
- eine elektrische Maschine (3), die einen Stator (8), einen um eine Achse X drehbaren beweglichen Rotor (9) und eine Nabe (22) zum Tragen des Rotors (9) enthält; und
- eine Reaktionsplatte (10) aus Guss einer Kupplung (2), die zu der Achse (X) koaxial ist;
wobei die Anordnung **dadurch gekennzeichnet ist, dass** die Nabe (22) zum Tragen des Rotors (9) aus Blech ist und eine axiale Schürze (26) zum Tragen des Rotors (9) sowie einen ringförmigen axialen Beschlag (28), der die Reaktionsplatte (10) aus Guss trägt, enthält und dass zwischen der elektrischen Maschine (3) und der Reaktionsplatte (10) ein axialer Raum ausgebildet ist.

2. Vorrichtung nach Anspruch 1, wobei der Rotor (9) an einer äußeren Oberfläche der axialen Schürze (26) der Nabe (22) befestigt ist.

3. Vorrichtung nach Anspruch 2, wobei der Rotor (9) ein Blechpaket enthält, das durch Frettieren an der äußeren Oberfläche der axialen Schürze (26) befestigt ist.

4. Vorrichtung nach Anspruch 2 oder 3, wobei die axiale Schürze (26) auf ihrer äußeren Oberfläche eine radiale Schulter (27) für die Abstützung des Rotors (9) aufweist.

5. Vorrichtung nach Anspruch 4, wobei die axiale Schürze (26) einen axialen Abschnitt (29) aufweist, der sich zwischen der radialen Schulter (27) für die Abstützung des Rotors (9) und dem ringförmigen radialen Beschlag (28) in der Weise erstreckt, dass zwischen dem ringförmigen radialen Beschlag (28) und dem Rotor (9) ein Zwischenraum definiert ist.

6. Vorrichtung nach einem der Ansprüche 1 bis 5, wobei der ringförmige radiale Beschlag (28) zwei ringförmige ebene Abschnitte aufweist, die durch einen gewölbten Abschnitt (30) verbunden sind.

7. Vorrichtung nach einem der Ansprüche 1 bis 6, wobei die Reaktionsplatte (10) an dem ringförmigen radialen Beschlag (28) in einer Umfangszone befestigt ist, die sich radial über eine Reibungszone der Reaktionsplatte (10) hinaus erstreckt, die dafür bestimmt ist, in der eingerückten Position mit einer Reibungsscheibe (11) zusammenzuwirken.

8. Vorrichtung nach einem der Ansprüche 1 bis 6, wobei die Reaktionsplatte (10) an dem ringförmigen radialen Beschlag (28) in einer Umfangszone befestigt ist, die sich radial innerhalb der Reibungszone der Reaktionsplatte (10) erstreckt, die dazu bestimmt ist, in der eingerückten Position mit einer Reibungsscheibe (11) zusammenzuwirken.

9. Vorrichtung nach einem der Ansprüche 1 bis 8, die eine Zwischenwelle (7) umfasst, die durch eine mittige Öffnung des Rotors (9) verläuft und ein erstes, gerilltes Ende, das dazu bestimmt ist, mit einer Nabe einer Reibungsscheibe (32) einer weiteren Kupplung (1) zusammenzuwirken, und ein zweites Ende, das mit einem Kranz (23) versehen ist, umfasst, wobei die Nabe (22) zum Tragen des Rotors (9) einen inneren Steg (25) aufweist, der sich radial in die axiale Schürze (26) erstreckt, die an dem Kranz (23) der Zwischenwelle (7) befestigt ist.

## Claims

1. Device for a motor vehicle transmission assembly comprising:
- an electric machine (3) comprising a stator (8), a rotor (9) capable of rotational movement about an axis X and a hub (22) for supporting the rotor (9); and
- a cast reaction plate (10), of a clutch (2), coaxial with the said axis X;
the said assembly being **characterized in that** the hub (22) for supporting the rotor (9) is made of sheet metal and comprises an axial skirt (26) for supporting the rotor (9) and an annular radial web (28) bearing the cast reaction plate (10) and **in that** an axial space is left between the electric machine (3) and the reaction plate (10) .

2. Device according to Claim 1, in which the rotor (9) is fixed on an external surface of the axial skirt (26) of the hub (22).

3. Device according to Claim 2, in which the rotor (9) comprises a stack of laminations which is fixed by shrink fitting onto the external surface of the axial skirt (26) .

4. Device according to Claim 2 or 3, in which the axial skirt (26) comprises on its external surface a radial shoulder (27) against which the rotor (9) can bear.

5. Device according to Claim 4, in which the axial skirt (26) has an axial portion (29) extending between the radial shoulder (27) against which the rotor (9) can bear and the annular radial web (28) so as to define a gap between the annular radial web (28) and the rotor (9) .

6. Device according to any one of Claims 1 to 5, in which the annular radial web (28) comprises two annular flat portions connected by a curved portion (30).

7. Device according to any one of Claims 1 to 6, in which the reaction plate (10) is fixed to the annular radial web (28) in a peripheral zone extending radially beyond the friction zone of the reaction plate (10) intended to collaborate with a friction disc (11) in the clutch-engaged position.

8. Device according to any one of Claims 1 to 6, in which the reaction plate (10) is fixed to the annular radial web (28) in a peripheral zone extending radially in the friction zone of the reaction plate (10) intended to collaborate with a friction disc (11) in the clutch-engaged position.

9. Device according to any one of Claims 1 to 8, comprising an intermediate shaft (7) passing through a central opening in the rotor (9) and comprising a splined first end intended to collaborate with a hub of a friction disc (32) of another clutch (1) and a second end provided with a flange ring (23), in which the hub (22) for supporting the rotor (9) comprises an internal flange (25) extending radially towards the inside of the axial skirt (26) fixed to the said flange ring (23) of the intermediate shaft (7).
